(19) Europäisches Patentamt
European Patent Office
Office européen des brevets

(11) **EP 2 929 738 B1**

(12) **EUROPEAN PATENT SPECIFICATION**

(45) Date of publication and mention
of the grant of the patent:
**13.11.2019 Bulletin 2019/46**

(21) Application number: **13860229.7**

(22) Date of filing: **05.12.2013**

(51) Int Cl.:
*H04W 56/00* (2009.01)　　　*H04W 48/16* (2009.01)

(86) International application number:
**PCT/US2013/073205**

(87) International publication number:
**WO 2014/089252 (12.06.2014 Gazette 2014/24)**

(54) **METHODS AND ARRANGEMENTS FOR TIME SYNCHRONIZATION AND SERVICE DISCOVERY**

VERFAHREN UND ANORDNUNGEN ZUR TAKTSYNCHRONISIERUNG UND DIENSTENTDECKUNG

PROCÉDÉS ET AGENCEMENTS POUR UNE SYNCHRONISATION TEMPORELLE ET UNE DÉCOUVERTE DE SERVICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2012 US 201261733648 P**

(43) Date of publication of application:
**14.10.2015 Bulletin 2015/42**

(73) Proprietor: **Intel Corporation**
**Santa Clara, CA 95054 (US)**

(72) Inventors:
• **HUANG, Po-Kai**
**San Jose, CA 95131 (US)**
• **QI, Emily H.**
**Gig Harbor, WA 98332 (US)**
• **PARK, Minyoung**
**San Ramon, CA 94582 (US)**

(74) Representative: **HGF Limited**
**Fountain Precinct**
**Balm Green**
**Sheffield S1 2JA (GB)**

(56) References cited:
**US-A1- 2008 123 558**　　**US-A1- 2008 225 768**
**US-A1- 2009 088 183**　　**US-A1- 2010 271 959**
**US-A1- 2011 161 697**　　**US-A1- 2011 216 660**

**EP 2 929 738 B1**

**Description**

TECHNICAL FIELD

Embodiments are in the field of wireless communications. More particularly, embodiments are in the field of communications protocols between wireless transmitters and receivers for time synchronization and service discovery.

BACKGROUND

Wi-Fi has become a ubiquitous wireless accessing technique for the mobile devices, and this trend has led to the need for Wi-Fi enabled mobile devices to discover each other. To achieve this goal, a starting point is for the mobile devices in proximity to one another to agree on specific synchronization timing. With the synchronization timing, stations (STAs) can awake in to discover each other. US 2008/123558 A1 may provide certain disclosures in the field of time synchronization and service discovery.

BRIEF DESCRIPTION OF THE DRAWINGS

| FIG. 1 | depicts an embodiment of a wireless network comprising a plurality of communications devices, including multiple fixed or mobile communications devices; |
| FIG. 1A | depicts an embodiment of a synchronization timeline for an access point and two stations to establish device-to-device communications between the stations for service discovery in a cluster of devices; |
| FIG. 1B | depicts an embodiment of a synchronization timeline for an access point and two stations to establish device-to-device communications between the stations for service discovery in a cluster of devices and to coordinate service discovery with different duty cycles for different services in the cluster of devices; |
| FIG. 1C | depicts an embodiment of a neighborhood with two time synchronization domains of two access points for time synchronization and two groups of stations to form two clusters of devices for service discovery; |
| FIG. 2 | depicts an embodiment of an apparatus to generate, transmit, receive, decode, and interpret communications between wireless communication devices for time synchronization and service discovery in a cluster of devices; |
| FIGs. 3A-B | depict embodiments of flowcharts for time synchronization and service discovery in a cluster of devices; and |
| FIGs. 4A-B | depict embodiments of flowcharts to transmit, receive, decode, and interpret communications with frames as illustrated in FIGs. 1-2 for time synchronization, service discovery, and service queries in a cluster of devices. |

DETAILED DESCRIPTION OF EMBODIMENTS

The following is a detailed description of novel embodiments depicted in the accompanying drawings. However, the amount of detail offered is not intended to limit anticipated variations of the described embodiments; on the contrary, the claims and detailed description are to cover all modifications, equivalents, and alternatives falling within the spirit and scope of the present teachings as defined by the appended claims. The detailed descriptions below are designed to make such embodiments understandable to a person having ordinary skill in the art.

References to "one embodiment," "an embodiment," "example embodiment," "various embodiments," etc., indicate that the embodiment(s) of the invention so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first," "second," "third," etc., to describe a common object, merely indicate that different instances of like objects are being referred to, and are not intended to imply that the objects so described must be in a given sequence, either temporally, spatially, in ranking, or in any other manner.

Embodiments may enable a number of Wireless Fidelity (Wi-Fi) enabled devices to synch in a cluster of devices, such as a peer-to-peer network, to allow devices to discover services offered by other devices in the cluster such as, e.g., sharing, showing, printing, synching content, emailing, posting, tweeting, facebooking, and any other discoverable services. In many embodiments, individual devices in the cluster may awake at different times to scan for access points. In some embodiments, the scans by the devices may be passive scans in which the devices wait to receive beacon frames from one or more access points. In further embodiments, the scans by the devices may comprise active scans in which the devices transmit probe request frames to request a probe response frame from one or more access points in proximity to the devices.

In several embodiments, the devices may receive beacon frames or probe responses from one or more access points that include indications of time, referred to generally as timestamps, such as indications of time generated by timing synchronization functions (TSFs) of the one or more access points. Many embodiments comprise logic to select a timestamp associated with an access point. In some embodiments, the logic may select the timestamp based upon the value of the timestamp and, in several embodiments, the logic may select the timestamp representative of the fastest clock. In some embodiments, the logic may compare the values of the timestamps from the one or more access points and select the timestamp with the largest value.

In many embodiments, each device that can participate in the cluster of devices may comprise a time synchronization bit sequence. The time synchronization bit sequence may be a predefined, n-bit sequence that is stored in or otherwise determinable by the devices in the cluster of devices. In such embodiments, the time synchronization bit sequence may reside in memory such as read only memory, flash memory, or random access memory accessible by medium access control (MAC) sublayer logic, or MAC logic, of the devices. For example, the time synchronization bit sequence may comprise a fixed, 20-bit sequence such as 0xABCDE.

In some embodiments, the devices may determine a synchronization time, which is a start time for a discovery period during which the devices may discover other devices in the cluster of devices. In several embodiments, the devices may comprise logic to determine the synchronization time based upon the time synchronization bit sequence. Upon selecting a timestamp from the one or more beacons and/or probe responses, the devices of the cluster may comprise logic to consistently determine the synchronization time based upon the timestamp. In some embodiments, the synchronization time may be determined by adding the current time of the device to the difference between an n-bit time synchronization bit sequence and the lower n bits of the timestamp multiplied by the passage of time per bit such as one microsecond (uS) if the time synchronization bit sequence is greater than the lower n bits of the timestamp:

$$\text{If } (A > B), \text{ Synchronization time} = \text{current time of device} + (A - B) \text{ x 1uS}$$

Where A = n-bit time synchronization bit sequence and B = lower n bits of the timestamp

On the other hand, if the time synchronization bit sequence is less than the lower n bits of the timestamp, then the synchronization time may be determined by adding the current time of the station to the difference between an all one, n-bit sequence and the difference between the lower n bits of the timestamp and the n-bit time synchronization bit sequence multiplied by the passage of time per bit such as one microsecond:

$$\text{Else, Synchronization time} = \text{current time} + \{\text{all ones n bit sequence} - (B - A)\} \text{ x}$$
$$1uS$$

The discovery period may be a period of time between two consecutive synchronization times. In many embodiments, the discovery period may be defined in the memory of the devices as a fixed number or as a calculation. For instance, the discovery period may be a period of time approximately equivalent to the number of bits in the time synchronization bit sequence (n-bits) times one microsecond. For illustration, if the number of bits in the time synchronization bit sequence is equal to 20 and the bits increment approximately once every one microsecond to demark the passage of time in, e.g., a time synchronization function of an access point, the discovery period may be calculated or pre-defined to be 2 to the power of 20 bits multiplied by one microsecond, which is approximately 10 to the power of 6 multiplied by one microsecond, or approximately one second.

In several embodiments, the start time for a discovery period may also demark the start of a discovery window. The discovery window is a period of time during which devices may discover services offered by other devices. The size of the discovery window may be defined by value or calculation. For instance, the discovery window may be set as a single period of time, may be established in a table based upon environmental conditions such as the density of communications, or may be established by calculation based upon the size of the discovery period, the time synchronization bit sequence, a density of communications, or the like. In some embodiments, the time period of the discovery window may be, e.g., fixed at 20 milliseconds. In other embodiments, the time duration of the discovery window may be, e.g., fixed at 20 milliseconds for a first usage model, may be fixed at 18 milliseconds for a second usage model, and etc.... In still other embodiments, the time duration of the discovery window may be, e.g., defined as a percentage of the discovery period. And in further embodiments, the time duration of the discovery window may be defined as any other function that can be consistently determined by the devices of the cluster, and in many embodiments, in a manner that strikes a balance between the devices that remain awake to discover other devices and the devices that return to a low power state at least for devices that operate on battery power.

After determining the synchronization time, the discovery period, and the discovery window, the devices may determine discovery windows at which to awake to receive and/or transmit communications. For instance, a device may determine to utilize one or more services. The device may awake at one or more discovery windows to discover a device that offers the one or more services and to utilize the one or more services. In one embodiment, for instance, a device may determine to use a content synchronization service. After determining the synchronization time, the discovery period, and the discovery window for a cluster of devices, the device may query a service during a discovery window and may receive a response to the query. In several embodiments, devices that offer the synchronization services may awake to offer such services at a determinable frequency such as every m discovery windows. In some embodiments, the device is aware of the frequency with which the synchronization services are offered. In further embodiments, the device may receive an indication of the frequency at which the services are offered from the device that is the provider of the service.

In several embodiments, after determining a timestamp of a fastest clock, a device may determine that a timestamp from a signal of another access point has a higher received signal strength indicator (RSSI). The greater RSSI may indicate that the corresponding access point is closer than the access point with the timestamp of the faster clock. In such embodiments, the device may determine to awake to discover devices in discovery windows determined based upon the timestamp of the closer access point. In further embodiments, the device may determine to switch to utilization of the cluster of devices associated with the timestamp of the closer access point and, in further embodiments, the device may continue to discover and/or utilize services of both the clusters of devices.

In many embodiments, after determining the synchronization time, the discovery period, and the discovery window, the devices that offer services may determine a frequency, or duty cycle, with which to offer the services to other devices. The duty cycle may be fixed for the type of service or for a particular service, or the duty cycle may be variable depending upon the device that offers the service. For instance, a device that operates off of battery power may offer a service with less frequency than a device that offers the service but operates off of an electrical power service.

In several embodiments, the duty cycles of different services may be set to different frequencies such that the services are not consistently offered in consecutive discovery windows. In many embodiments, varying the duty cycles defined for different services may reduce traffic congestion in discovery windows.

Various embodiments may be designed to address different technical problems associated with time synchronization and service discovery. For instance, some embodiments may be designed to address one or more technical problems such as consistently determining a synchronization time between multiple devices of a cluster of devices, consistently determining a discovery period for the cluster of device, consistently determining a discovery window for devices in the cluster of devices, determining wake periods of a device to utilize services, determining duty cycles of services offered to devices, and the like.

Different technical problems such as those discussed above may be addressed by one or more different embodiments. For instance, some embodiments that are designed to consistently determining a synchronization time between multiple devices of a cluster of devices may do so by one or more different technical means such as defining a timestamp to select such that devices that received the same set of timestamps consistently choose the same timestamp from which to determine the synchronization time. Many embodiments may consistently determine a discovery period for the cluster of device by determining the discovery period based upon the number of bits in the time synchronization bit sequence. Several embodiments may consistently determine a discovery window for devices in the cluster of devices by defining the discovery window such as by one or more fixed numbers or by one or more percentages of a known number. Further embodiments determine duty cycles of services offered to devices by defining different duty cycles for different services.

Some embodiments implement Institute of Electrical and Electronic Engineers (IEEE) 802.11 systems such as IEEE 802.11ah systems and other systems that operate in accordance with standards such as the IEEE 802.11-2012, IEEE Standard for Information technology-Telecommunications and information exchange between systems-Local and metropolitan area networks-Specific requirements-Part 11: Wireless LAN Medium Access Control (MAC) and Physical Layer (PHY) Specifications (http://standards.ieee.org/getieee802/download/802.11-2012.pdf).

Several embodiments comprise devices such as routers, switches, servers, workstations, netbooks, mobile devices (Laptop, Smart Phone, Tablet, and the like), as well as sensors, meters, controls, instruments, monitors, appliances, and the like.

Logic, modules, devices, and interfaces herein described may perform functions that may be implemented in hardware and/or code. Hardware and/or code may comprise software, firmware, microcode, processors, state machines, chipsets, or combinations thereof designed to accomplish the functionality.

Embodiments may facilitate wireless communications. Some embodiments may comprise low power wireless communications like Bluetooth®, wireless local area networks (WLANs), wireless metropolitan area networks (WMANs), wireless personal area networks (WPAN), cellular networks, communications in networks, messaging systems, and smart-devices to facilitate interaction between such devices. Furthermore, some wireless embodiments may incorporate a single antenna while other embodiments may employ multiple antennas. The one or more antennas may couple with a processor and a radio to transmit and/or receive radio waves. For instance, multiple-input and multiple-output (MIMO) is the use of radio channels carrying signals via multiple antennas at both the transmitter and receiver to improve communication performance.

While some of the specific embodiments described below will reference the embodiments with specific configurations, those of skill in the art will realize that embodiments of the present disclosure may advantageously be implemented with other configurations with similar issues or problems.

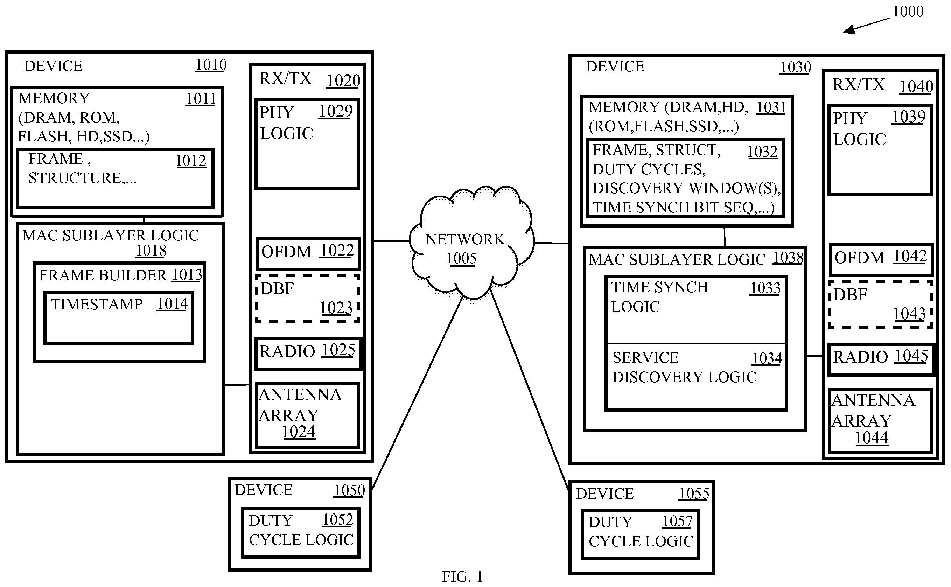

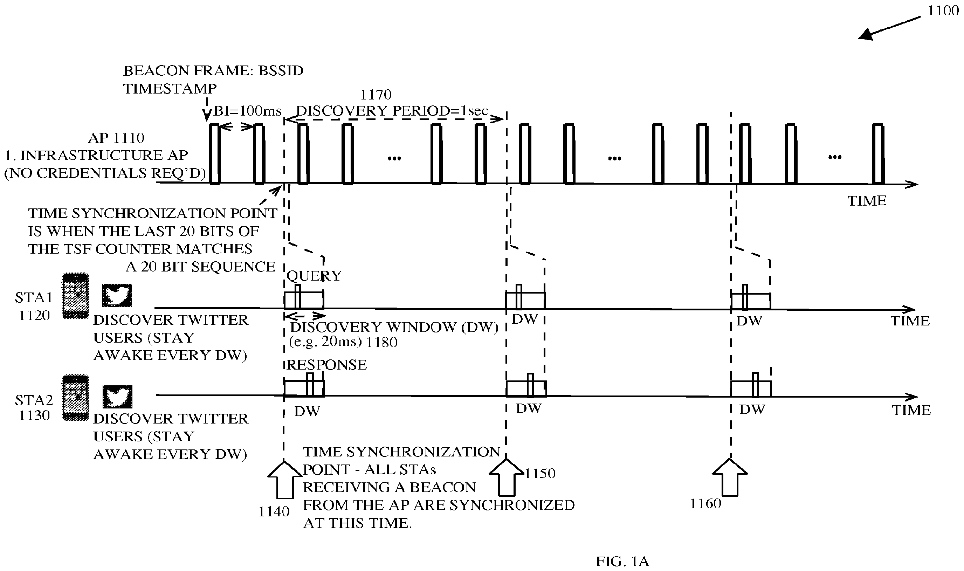

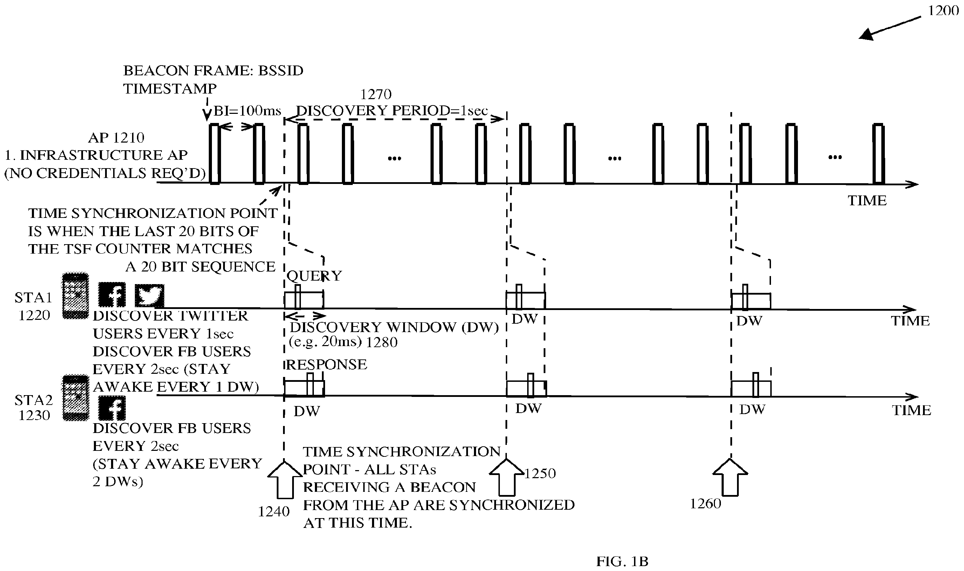

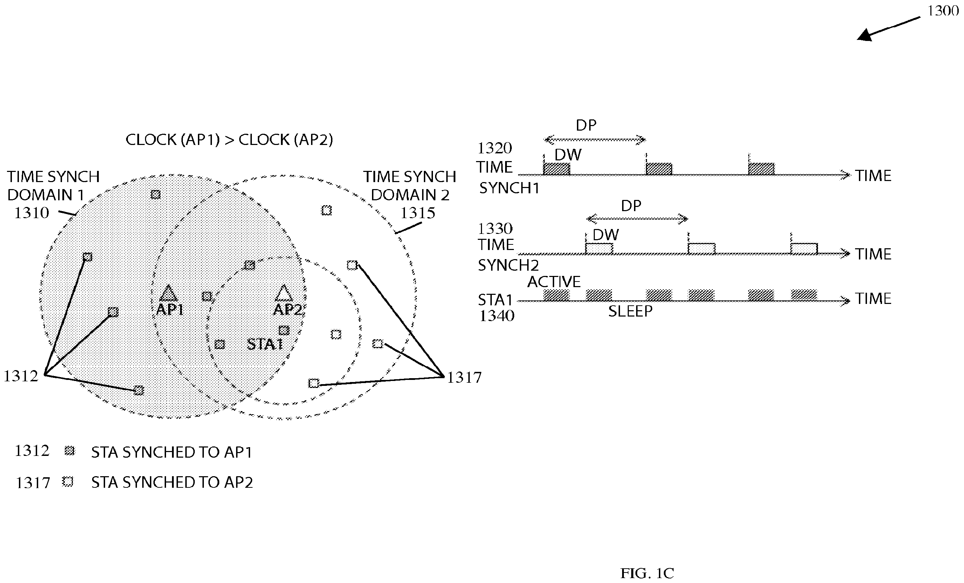

Turning now to FIG. 1, there is shown an embodiment of a wireless communication system 1000. The wireless communication system 1000 comprises a communications device 1010 that may be wire line and wirelessly connected to a network 1005. In many embodiments, the network 1005 may represent a logical affiliation of the devices 1010, 1030, 1050, and 1055 in a synchronized cluster of devices. In further embodiments, the devices 1010, 1030, 1050, and 1055 may physically connect to a network infrastructure but have the capabilities of peer-to-peer communications.

The communications device 1010 may communicate wirelessly with a plurality of communication devices 1030, 1050, and 1055. The communications device 1010 may comprise an access point. The communications device 1030 may comprise a low power communications device such as a consumer electronics device, a personal mobile device, or the like. And communications devices 1050 and 1055 may comprise sensors, stations, access points, hubs, switches, routers, computers, laptops, netbooks, cellular phones, smart phones, PDAs (Personal Digital Assistants), or other wireless-capable devices. Thus, communications devices may be mobile or fixed.

In the present embodiment, the communications devices 1050 and 1055 offer services such as sharing, showing, printing, synching content, emailing, posting, tweeting, facebooking, and any other discoverable services to the devices synched to the cluster of devices represented by the network 1005. In several embodiments, services offered by devices may be offered at different duty cycles. In some embodiments, the duty cycles for different services may be stored in memory such as memory 1031 of the communications device 1030. For example, a particular service offered by the communications device 1050 may only be offered every third discovery period and the different service offered by the communications device 1055 may be offered every fourth discovery period so the service offerings by the communications devices 1050 and 1055 may only be offered concurrently in the cluster of devices every 12th discovery period.

Initially, the communications device 1010 may transmit a beacon with a timestamp 1014 that is received by the communications devices 1030, 1050, and 1055. In further embodiments, one or more of the communications devices 1030, 1050, and 1055 may transmit a probe request to the communications device 1010 and receive a probe response 1014 that includes the timestamp 1014. In some embodiments, the communications devices 1030, 1050, and 1055 may receive multiple beacons and/or may receive multiple probe responses, each having a timestamp of the corresponding communications device.

The communications device 1010 may have the largest timestamp 1014 and may be designated as the fastest clock as a result by the medium access control (MAC) sublayer logic, or MAC logic, of each of the communications devices 1030, 1050, and 1055, such as MAC logic 1038. After selecting the timestamp 1014, the communications devices 1030, 1050, and 1055 may comprise time synchronization logic such as time synchronization logic 1033 to determine a synchronization time. Note that each of the communication devices 1030, 1050, and 1055 may go through the process of determining the synchronization time at different times or at the same time since each of the communication devices 1030, 1050, and 1055 can perform each of the described functions independently from one another.

The time synchronization logic 1033 may determine a predefined time synchronization bit sequence by, e.g., accessing the time synchronization bit sequence in memory 1031. The time synchronization bit sequence may be known by all devices that can join the cluster of devices and may comprise a number of bits such as n-bits. In some embodiments, the n-bits may comprise 20 bits. In other embodiments, the n-bits may be a different number of bits.

The time synchronization logic 1033 may determine the synchronization time based upon a timestamp and a time synchronization bit sequence. The synchronization time may be the time at which the discovery period for the cluster of devices begins. The time synchronization logic 1033 may determine the synchronization time by any formula that consistently calculates the time based upon the time stamp and the time synchronization bit sequence so long as every device that can join the cluster of devices comprises the same formula for determining the synchronization time. In the present embodiment, the time synchronization logic 1033 may determine the synchronization time by the following formula:

If $(A > B)$,

$$\text{Synchronization time} = \text{current time of device} + (A - B) \times 1uS$$

Else,

$$\text{Synchronization time} = \text{current time} + \{\text{all ones n bit sequence} - (B - A)\} \times 1uS$$

where A = n-bit time synchronization bit sequence and B = lower n bits of the timestamp

After determining the synchronization time, service discovery logic 1034 of the communications device 1030 in the cluster of devices may determine a discovery period and a discovery window that is the same discovery period and a discovery window determined by the other communications devices 1050 and 1055 in the cluster of devices. The discovery period may be a period of time that starts at each synchronization time and resides between two consecutive discovery windows. In many embodiments, the discovery period may be defined in the memory 1032 of the communications device 1030 as a fixed number stored in the memory 1032 or as a calculation stored in memory 1032 or built into the MAC logic 1038.

In the present embodiment, the service discovery logic 1034 may determine the discovery period as a period of time approximately equivalent to the number of bits in the time synchronization bit sequence (n-bits) such as 20 bits, multiplied by one microsecond (1uS), which is approximately one second. In some embodiments, the service discovery logic 1034 may access the memory 1031 to determine the calculation or to obtain the actual duration of the discovery period.

In several embodiments, the service discovery logic 1034 may determine the discovery window by accessing the memory 1032. In some embodiments, the discovery window may be a single duration that is determined by the industry designing these communications devices 1030, 1050, and 1055. In further embodiments, the discovery window may be a table of durations, each duration being associated with a different usage model. For instance, one or more usage models may describe different levels of traffic within the proximity of the cluster of devices and may include a calculation or other determination or process for selecting an appropriate usage model and thus selecting the appropriate discovery window duration. In some embodiments, the durations of the discovery windows may be percentages or other portions of the discovery period.

After the service discovery logic 1034 determines the discovery window, the communications device 1030 may awake during one or more of the discovery windows to discover services available in the cluster of devices such as the services offered by the communications devices 1050 and 1055. In some embodiments, the MAC logic 1038 of the communications device 1030 may transmit a query for a particular service. In the present embodiment, the MAC logic 1038 may access the memory 1032 to determine a duty cycle associated with the service. After determining the duty cycle associated with the selected service, the MAC logic 1038 may select discovery windows during which to awake and to transmit queries to determine if the service is available in the cluster of devices. For example, if the duty cycle of a service involves offering the service every third discovery window, the MAC logic 1038 may determine to transmit a service query three consecutive discovery windows to determine if the service is available in the cluster of devices or if the service is not available in the cluster of devices.

In some embodiments, the MAC logic 1038 may, after determining the timestamp 1014 select a second timestamp from a second signal that has a signal power indicator that is higher than the signal power indicator associated with the communications device 1010. The time synch logic 1033 may determine a second synchronization time based upon the second time stamp and the service discovery logic 1034 may determine that the duration of the discovery period is the same. In some embodiments, the service discovery logic 1034 may determine that the duration of the discovery window is the same and, in other embodiments, the service discovery logic 1034 may determine a second duration for the discovery window associated with the second timestamp. In many embodiments, the communications device 1030 may then discover services in the second cluster of devices that are associated with the second timestamp.

Referring also to FIG. 1A, there is shown an example of synchronization timeline 1100 for an access point (AP) 1110 and two stations 1120 and 1130 to establish device-to-device communications between the stations 1120 and 1130 for service discovery in a cluster of devices. In the present embodiment, the AP 1110 transmits a beacon with the fastest timestamp and both the stations 1120 and 1130 determine the synchronization times 1140, 1150, and 1160, the discovery period (DP) 1170, and the discovery window (DW) 1180. The synchronization timeline 1100 illustrates that the station 1120 awakes at every synchronization time 1140, 1150, and 1160 to transmit a service query or service request such as a twitter service query in each discovery window 1180. The station 1130 responds to the service query/request from the station 1120 in every discovery window 1180. In this embodiment, the duty cycle of the service offered by station 1130 is 100% or 1 second or, in other words, the service is offered in every discovery window 1180.

Referring to FIG. 1B, there is shown another example of synchronization timeline 1200 for an access point (AP) 1210 and two stations 1220, 1230 to establish device-to-device communications between the stations 1220, 1230 for service discovery in a cluster of devices. In the present embodiment, the AP 1210 transmits a beacon with the fastest timestamp and both the stations 1220 and 1230 determine the synchronization times 1240, 1250, and 1260, the discovery period 1270, and the discovery window 1280. The synchronization timeline 1200 illustrates that the station 1220 awakes at every synchronization time 1240, 1250, and 1260 to transmit a service query, service request, or service response in each discovery window 1280. In the present embodiments, the station 1220 offers a twitter service every discovery period 1270 with duty cycle of 100% (1 second) and a facebook service every other discovery window 1270 with a duty cycle of 50% (2 seconds).

FIG. 1C illustrates an example of a neighborhood 1300 with two time synchronization domains 1310 and 1315 based upon timestamps from two access points, AP1 and AP2, and two groups of stations 1312 and 1317 to form two clusters of devices. The stations 1312 within the circle of time synch domain 1310 centered about AP1 illustrates stations that may join the cluster of devices about AP1 and the stations 1317 within the circle of time synch domain 1315 centered about AP2 illustrates stations that may join the cluster of devices about AP2. Furthermore, the time synchronization diagrams 1320 and 1330 illustrate the relative synchronization times of the time synch domains 1310 and 1315.

In the present embodiment, the clock for AP1 is faster than the clock of AP2. In many embodiments, a clock is considered fastest if, at the same moment in time, the clock has the largest timestamp. Since the station STA1 is within both of the time synch domains 1310 and 1315, the STA1 may compare the timestamps from AP1 And AP2 to determine that the timestamp from AP1 is greater than the timestamp for AP2. In response, STA1 may join the cluster of devices in time synch domain 1310 by determining the synchronization time, a discovery period (DP) and a discovery window (DW). Similarly, the stations 1312 within reception range of the AP1 may join the cluster of devices in time synch domain 1310 by determining the synchronization time, a discovery period and a discovery window. The stations 1317 that are outside of the transmission range of the AP1 may join the time synchronization domain 1315 based upon receipt of the timestamp from the AP2.

STA1 may also determine that the RSSI of the signal from AP2 is greater than the RSSI of the signal from AP1. In response, STA1 may determine to also awake during discovery windows of the time synch domain 1315 to take advantage of the services offered by the stations 1317 of the time synch domain 1315. The timing diagram 1340 illustrates times when STA1 is active or awake and also times when STA1 is inactive or in a sleep state. The boxes represent the active states and the absence of the boxes along the time line illustrates the sleep states.

Referring again to FIG. 1, the communication devices 1010 and 1030 comprise memory 1011 and 1031, and Media Access Control (MAC) sublayer logic 1018 and 1038, respectively. The memory 1011 and 1031 may comprise a storage medium such as Dynamic Random Access Memory (DRAM), read only memory (ROM), buffers, registers, cache, flash memory, hard disk drives, solid-state drives, or the like. The memory 1011 and 1031 may store the a time synchronization bit sequence, a synchronization time calculation, a discovery period value or calculation, a discovery window value or calculation, service duty cycle indications, and frames and/or frame structures, or portions thereof such as a synch, beacon, device discovery request, device discovery response, service query, service response, permission request, and permission response frames.

The MAC sublayer logic 1018, 1038 may comprise logic to implement functionality of the MAC sublayer of the data link layer of the communications device 1010, 1030. The MAC sublayer logic 1018, 1038 may generate the frames such as management frames and the physical layer logic 1019, 1039 may generate physical layer protocol data units (PPDUs) based upon the frames. In the present embodiment, for instance, the MAC sublayer logic 1018 may comprise the frame builder 1013 to generate frames 1014 and the data unit builders of the physical layer logic 1029, 1039 may prepend the frames with preambles to generate PPDUs for transmission via a physical layer device such as the transceivers (RX/TX) 1020 and 1040.

The communications devices 1010, 1030, 1050, and 1055 may each comprise a transceiver such as transceivers (RX/TX) 1020 and 1040. In many embodiments, transceivers 1020 and 1040 implement orthogonal frequency-division multiplexing (OFDM) 1022, 1042. OFDM 1022, 1042 implements a method of encoding digital data on multiple carrier frequencies. OFDM 1022, 1042 comprises a frequency-division multiplexing scheme used as a digital multi-carrier modulation method. A large number of closely spaced orthogonal sub-carrier signals are used to carry data. The data is divided into several parallel data streams or channels, one for each sub-carrier. Each sub-carrier is modulated with a modulation scheme at a low symbol rate, maintaining total data rates similar to conventional single-carrier modulation schemes in the same bandwidth.

An OFDM system uses several carriers, or "tones," for functions including data, pilot, guard, and nulling. Data tones are used to transfer information between the transmitter and receiver via one of the channels. Pilot tones are used to maintain the channels, and may provide information about time/frequency and channel tracking. And guard tones may help the signal conform to a spectral mask. The nulling of the direct component (DC) may be used to simplify direct conversion receiver designs. And guard intervals may be inserted between symbols such as between every OFDM symbol as well as between the short training field (STF) and long training field (LTF) symbols in the front end of the transmitter during transmission to avoid inter-symbol interference (ISI), which might result from multi-path distortion.

Each transceiver 1020, 1040 comprises a radio 1025, 1045 comprising an RF transmitter and an RF receiver. The RF transmitter comprises an OFDM 1022, which impresses digital data, OFDM symbols encoded with tones, onto RF frequencies, also referred to as sub-carriers, for transmission of the data by electromagnetic radiation. In the present embodiment, the OFDM 1022 may impress the digital data as OFDM symbols encoded with tones onto the sub-carriers to for transmission. The OFDM 1022 may transform information signals into signals to be applied via the radio 1025, 1045 to elements of an antenna array 1024. An RF receiver receives electromagnetic energy at an RF frequency and extracts the digital data from the OFDM symbols.

In some embodiments, the communications device 1010 optionally comprises a Digital Beam Former (DBF) 1022, as indicated by the dashed lines. The DBF 1022 transforms information signals into signals to be applied to elements of an antenna array 1024. The antenna array 1024 is an array of individual, separately excitable antenna elements. The signals applied to the elements of the antenna array 1024 cause the antenna array 1024 to radiate one to four spatial channels. Each spatial channel so formed may carry information to one or more of the communications devices 1030, 1050, and 1055. Similarly, the communications device 1030 comprises the transceiver (RX/TX) 1040 to receive and transmit signals from and to the communications device 1010. The transceiver (RX/TX) 1040 may comprise an antenna array 1044 and, optionally, a DBF 1042.

FIG. 1 may depict a number of different embodiments including a Multiple-Input, Multiple-Output (MIMO) system with, e.g., four spatial streams, and may depict degenerate systems in which one or more of the communications devices 1010, 1030, 1050, and 1055 comprise a receiver and/or a transmitter with a single antenna including a Single-Input, Single Output (SISO) system, a Single-Input, Multiple Output (SIMO) system, and a Multiple-Input, Single Output (MISO) system. In the alternative, FIG. 1 may depict transceivers that include multiple antennas and that may be capable of multiple-user MIMO (MU-MIMO) operation.

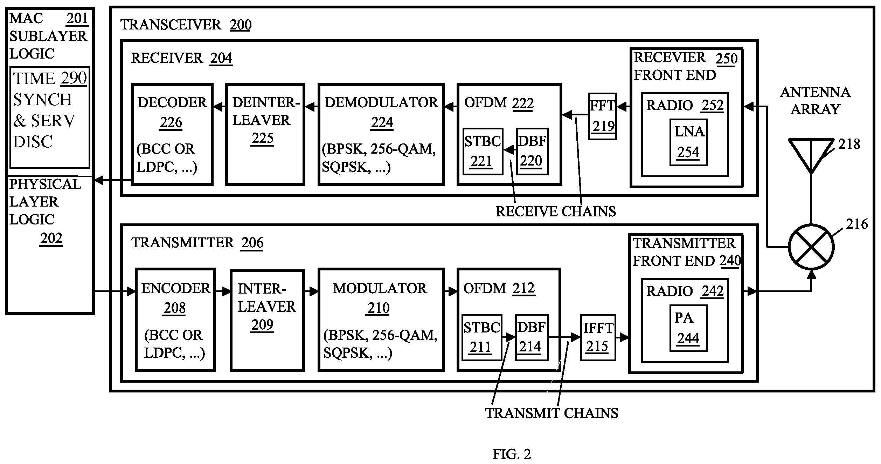

FIG. 2 depicts an embodiment of an apparatus to generate, transmit, receive, and interpret frames such as beacon frames, device discovery request/response frames, and other frames. The apparatus comprises a transceiver 200 coupled with Medium Access Control (MAC) sublayer logic 201. The MAC sublayer logic 201 may determine a frame and the physical layer (PHY) logic 250 may determine the PPDU by prepending the frame or multiple frames, MAC protocol data units (MPDUs), with a preamble to transmit via transceiver 200.

In many embodiments, the MAC sublayer logic 201 may comprise a frame builder to generate frames and a time synchronization and service discovery logic 290 such as the time synch logic 1033 and service discovery logic 1034 described in conjunction with FIG. 1 to determine a synchronization time and discovery period for a cluster of devices. The MAC sublayer logic 201 may enable devices to synch in a cluster of devices to allow devices to discover services offered by other devices in the cluster such as, e.g., sharing, showing, printing, synching content, emailing, posting, tweeting, facebooking, and any other discoverable services. The MAC sublayer logic 201 may awake at different times to scan for timestamps from stations such as access points when joining a cluster of devices to determine a timestamp of the fastest clock and/or to determine a timestamp from an access point that is close in proximity to the MAC sublayer logic 201 by, for example, comparing the signal power of signals received from different access points to determine which signal has the greatest strength. In other embodiments, the MAC sublayer logic 201 may determine the slowest clock or select a timestamp based upon other factors.

In many embodiments the MAC sublayer logic 201 may implement passive scans in which the devices wait to receive beacon frames from one or more access points or active scans in which the devices transmit probe request frames to request a probe response frame from one or more access points in proximity to the devices. The MAC sublayer logic 201 may then determine a synchronization time based upon a timestamp and a time synchronization bit sequence. In several embodiments, the MAC sublayer logic 201 may determine a discovery period based upon the synchronization time and the time synchronization bit sequence and determine the discovery window from memory accessible by the MAC sublayer logic 201.

The PHY logic 250 may comprise a data unit builder 203. The data unit builder 203 may determine a preamble to prepend the MPDU or more than one MPDUs to generate a PPDU. In many embodiments, the data unit builder 203 may create the preamble based upon communications parameters chosen through interaction with a destination communications device. The preamble may comprise training sequences such a short training field (STF) and a long training field (LTF) to provide initial channel updates to the receiving device to allow the receiving device to update weight coefficients for a weighting function implemented by an equalizer in the receiving device.

The transceiver 200 comprises a receiver 204 and a transmitter 206. The transmitter 206 may comprise one or more of an encoder 208, a modulator 210, an OFDM 212, and a DBF 214. The encoder 208 of transmitter 206 receives and encodes data destined for transmission from the MAC sublayer logic 202 with, e.g., a binary convolutional coding (BCC), a low density parity check coding (LDPC), and/or the like. The modulator 210 may receive data from encoder 208 and may impress the received data blocks onto a sinusoid of a selected frequency via, e.g., mapping the data blocks into a corresponding set of discrete amplitudes of the sinusoid, or a set of discrete phases of the sinusoid, or a set of discrete frequency shifts relative to the frequency of the sinusoid.

The output of modulator 209 is fed to an orthogonal frequency division multiplexing (OFDM) module 212. The OFDM module 212 may comprise a space-time block coding (STBC) module 211, a digital beamforming (DBF) module 214, and an inverse, fast Fourier transform (IFFT) module 215. The STBC module 211 may receive constellation points from the modulator 209 corresponding to one or more spatial streams and may spread the spatial streams to a greater number of space-time streams (also generally referred to as data streams). In some embodiments, the STBC 211 may be controlled to pass through the spatial streams for situations in which, e.g., the number of spatial streams is the maximum number of space-time streams. Further embodiments may omit the STBC.

The OFDM module 212 impresses or maps the modulated data formed as OFDM symbols onto a plurality of orthogonal sub-carriers so the OFDM symbols are encoded with the sub-carriers or tones. In some embodiments, the OFDM symbols are fed to the Digital Beam Forming (DBF) module 214. Generally, digital beam forming uses digital signal processing algorithms that operate on the signals received by, and transmitted from, an array of antenna elements.

The Inverse Fast Fourier Transform (IFFT) module 215 may perform an inverse discrete Fourier transform (IDFT) on the OFDM symbols. The output of the IFFT module 215 may enter the transmitter front end 240. The transmitter front end 240 may comprise a radio 242 with a power amplifier (PA) 244 to amplify the signal and prepare the signal for transmission via the antenna array 218. In some embodiments, the radio may not comprise a power amplifier 244 or may be capable of bypassing the power amplifier 244 if such amplification is unnecessary. The signal may be up-converted to a higher carrying frequency or may be performed integrally with up-conversion. Shifting the signal to a much higher frequency before transmission enables use of an antenna array of practical dimensions. That is, the higher the transmission frequency, the smaller the antenna can be. Thus, an up-converter multiplies the modulated waveform by a sinusoid to obtain a signal with a carrier frequency that is the sum of the central frequency of the waveform and the frequency of the sinusoid.

The transceiver 200 may also comprise duplexers 216 connected to antenna array 218. Thus, in this embodiment, a single antenna array is used for both transmission and reception. When transmitting, the signal passes through duplexers 216 and drives the antenna with the up-converted information-bearing signal. During transmission, the duplexers 216 prevent the signals to be transmitted from entering receiver 204. When receiving, information bearing signals received by the antenna array pass through duplexers 216 to deliver the signal from the antenna array to receiver 204. The duplexers 216 then prevent the received signals from entering transmitter 206. Thus, duplexers 216 operate as switches to alternately connect the antenna array elements to the receiver 204 and the transmitter 206.

The antenna array 218 radiates the information bearing signals into a time-varying, spatial distribution of electromagnetic energy that can be received by an antenna of a receiver. The receiver can then extract the information of the received signal. In other embodiments, the transceiver 200 may comprise one or more antennas rather than antenna arrays and, in several embodiments, the receiver 204 and the transmitter 206 may comprise their own antennas or antenna arrays.

The transceiver 200 may comprise a receiver 204 for receiving, demodulating, and decoding information bearing communication signals such as synch frames transmitted by other stations. The receiver 204 may comprise a receiver front-end to detect the signal, detect the start of the packet, remove the carrier frequency, and amplify the subcarriers via a radio 252 with a low noise amplifier (LNA) 254. The communication signals may comprise, e.g., 32 tones on a 1 MHz carrier frequency. The receiver 204 may comprise a fast Fourier transform (FFT) module 219. The FFT module 219 may transform the communication signals from the time domain to the frequency domain.

The receiver 204 may also comprise an OFDM module 222, a demodulator 224, a deinterleaver 225, and a decoder 226, and the equalizer 258 may output the weighted data signals for the OFDM packet to the OFDM module 222. The OFDM 222 extracts signal information as OFDM symbols from the plurality of subcarriers onto which information-bearing communication signals are modulated.

The OFDM module 222 may comprise a DBF module 220, and an STBC module 221. The received signals are fed from the equalizer to the DBF module 220 transforms N antenna signals into L information signals. And the STBC module 221 may transform the data streams from the space-time streams to spatial streams.

The demodulator 224 demodulates the spatial streams. Demodulation is the process of extracting data from the spatial streams to produce demodulated spatial streams. The method of demodulation depends on the method by which the information is modulated onto the received carrier signal and such information is included in the transmission vector (TXVECTOR) included in the communication signal. Thus, for example, if the modulation is BPSK, demodulation involves phase detection to convert phase information to a binary sequence. Demodulation provides to the deinterleaver 225 a sequence of bits of information.

The deinterleaver 225 may deinterleave the sequence of bits of information. For instance, the deinterleaver 225 may store the sequence of bits in columns in memory and remove or output the bits from the memory in rows to deinterleave the bits of information. The decoder 226 decodes the deinterleaved data from the demodulator 224 and transmits the decoded information, the MPDU, to the MAC sublayer logic 202.

Persons of skill in the art will recognize that a transceiver may comprise numerous additional functions not shown in FIG. 2 and that the receiver 204 and transmitter 206 can be distinct devices rather than being packaged as one transceiver. For instance, embodiments of a transceiver may comprise a Dynamic Random Access Memory (DRAM), a reference oscillator, filtering circuitry, synchronization circuitry, an interleaver and a deinterleaver, possibly multiple frequency conversion stages and multiple amplification stages, etc. Further, some of the functions shown in FIG. 2 may be integrated. For example, digital beam forming may be integrated with orthogonal frequency division multiplexing.

The MAC sublayer logic 201 may parse the MPDU based upon a format defined in the communications device for a frame to determine the particular type of frame by determining the type value and the subtype value. The MAC sublayer logic 201 may then parse and interpret the remainder of MPDU based upon the definition for the frame of the particular type and subtype indicated in the MAC header. For instance, if the frame is a management frame such as a beacon frame, the frame body may include parameters such as a timestamp. Based upon the receipt of the beacon frame, the time synchronization and service discovery logic 290 may parse the beacon frame to determine the timestamp, compare the timestamp to other timestamps, if applicable, to determine the largest timestamp and calculate the synchronization time and the discovery period based upon the timestamp.

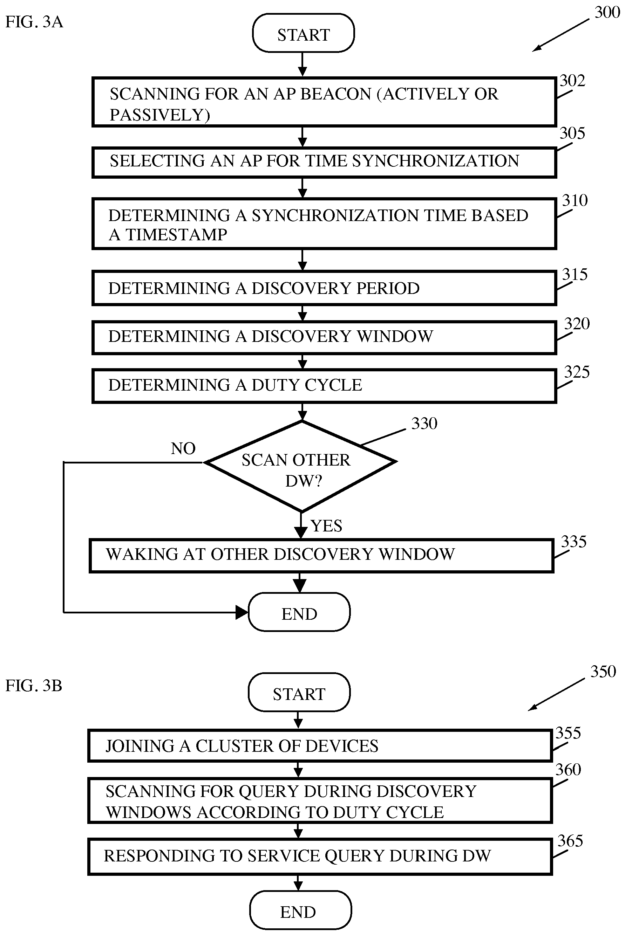

FIG. 3A illustrates an embodiment of a flowchart 300 to determine a synchronization time and discovery period for a cluster of devices. The flowchart 300 begins with scanning for an AP beacon, actively or passively (element 302). In many embodiments, the device may determine to synchronize with a cluster of devices to seek one or more services such as a twitter service to transfer tweets to an Internet twitter account. In such embodiments, the device may seek a timestamp from a prominent access point or other station that can facilitate the creation of a cluster of devices to see if a device with the one or more services is available in proximity to the device. In many embodiments, the device may gather the timestamps from all the beacons or probe responses available within a period of time and then select an access point for time synchronization to a cluster of devices in the vicinity based upon characteristics of the timestamp received from the access point (element 305).

After selecting the access point, the device may determine a synchronization time based upon the timestamp (element 310). In many embodiments, the device need not associate with the access point or even interact with the access point unless the device is actively scanning for the access point. The device may receive the beacon passively and utilize the timestamp without further interaction with the access point. In some embodiments, the device may receive the beacon or transmit a probe request to the access point periodically to receive updated timestamps for verification or updating of the synchronization time for the cluster of devices.

The device may determine the synchronization time based upon the timestamp (element 310) by employing a formula in the memory of the device. The formula may reside in read only memory and may never change or may reside in memory such as flash memory that may be updated on occasion or periodically. In some embodiments, the formula may involve adding the current time of the device to the difference between an n-bit time synchronization bit sequence and the lower n bits of the timestamp multiplied by the passage of time per bit such as one microsecond (uS) if the time synchronization bit sequence is greater than the lower n bits of the timestamp. Else, if the time synchronization bit sequence is less than the lower n bits of the timestamp, then the synchronization time may be determined by adding the current time of the station to the difference between an all one, n-bit sequence and the difference between the lower n bits of the timestamp and the n-bit time synchronization bit sequence multiplied by the passage of time per bit such as one microsecond.

After determining the synchronization time based upon the time stamp, the device may determine the discovery period (element 315). In many embodiments, the discovery period may be defined in the memory of the devices as a fixed number such as one second or as a calculation such as the number of bits in the time synchronization bit sequence (n-bits) times one microsecond. In one embodiment, the discovery period may be $2^{20}$ bits multiplied by 1 bit per microsecond, which is approximately 1 second.

The device may also determine the discovery window associated with service discovery in the cluster of devices (element 320). In several embodiments, the discovery window may be a single value or a percentage of the discovery period such as 20 milliseconds. In further embodiments, the discovery window may vary based upon the density of traffic in the cluster of devices. For example, the discovery window of the device may be adjusted if the device is unable to transmit a service query during two or three consecutive discovery windows.

In some embodiments, the device may offer services such as facebooking and the device may access memory to determine a duty cycle associated with, e.g., facebooking (element 325). In other embodiments, facebooking may fall within a general category of social media and a duty cycle for social media may be set in the memory of the device. In still other embodiments, the type of transmission may define the duty cycle. For instance, uploading of text may have a first duty cycle. Uploading a picture may fall within a category within a different duty cycle than the text. Uploading movies may fall within a third category. And downloading text, pictures, or movies may fall within fourth, fifth, and sixth categories, respectively.

After the device "joins" the cluster of devices by determining the synchronization time, discovery period, and discovery window for communications with devices of the cluster of devices, the device may determine to scan another discovery window of a different cluster of devices (element 330). In some embodiments, after determining a timestamp of a fastest clock, a device may determine that a different timestamp associated with a different cluster of devices has a higher received signal strength indicator (RSSI). The greater RSSI may indicate that the corresponding access point is closer than the access point associated with the current cluster of devices. In such embodiments, the device may determine to awake to discover devices in discovery periods determined based upon the timestamp of the closer access point (element 335).

FIG. 3B illustrates an embodiment of a flowchart 350 to determine a synchronization time and discovery period for a cluster of devices to offer one or more services. The flowchart 350 begins with joining or participating in a cluster of devices (element 355). In many embodiments, joining or participating in the cluster of devices may comprise determining the synchronization time, the discovery period, and the discovery window. In several embodiments, joining or participating in a cluster of devices (element 355) may involve awaking to scan communications during the discovery window.

After awaking to join or participate in the cluster of devices, the device may scan the medium for queries during the discovery windows defined by duty cycles associated with the one or more services being offered by the device (element 360). For instance, if the device is offering a first service, the device may determine a first duty cycle associated with the first service and begin offering the first service in the next discovery window. Furthermore, if the device is offering a second service, the second service may be associated with a second duty cycle and the device may awake in discovery windows associated with the first and second duty cycles. However, in many embodiments, the device may only offer the services in accordance with the defined duty cycles despite being awake in more duty cycles. In other words, the device may offer the first service only in the discovery windows defined by the first duty cycle despite being awake in other discovery windows. In other embodiments, the device may offer all services in each of the discovery windows. In some of these embodiments, the device may choose only one duty cycle during which to offer the services.

In many embodiments, the device may receive a query from another device in the cluster of devices that is requesting one of the offered services and the device may respond if the discovery window corresponds to the duty cycle of the service being queried (element 365).

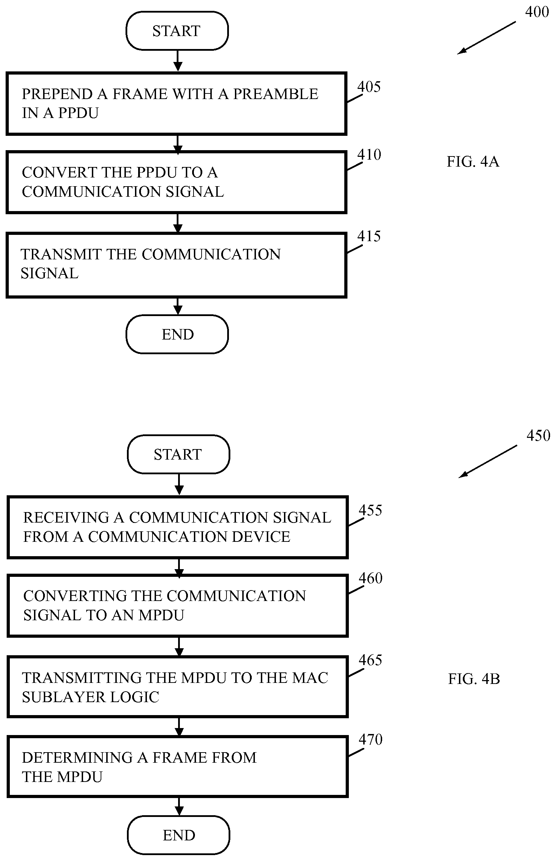

FIGs. 4A-B depict embodiments of flowcharts 400 and 450 to transmit, receive, and interpret communications with a frame. Referring to FIG. 4A, the flowchart 400 may begin with receiving a beacon frame or synch frame with a timestamp from the MAC sublayer logic. The MAC sublayer logic of the communications device may generate the frame as a management frame to transmit to other devices of a cluster of devices and may pass the frame as an MAC protocol data unit (MPDU) to a PHY logic that transforms the data into a packet that can be transmitted to the access point. The PHY logic may generate a preamble to prepend the PHY service data unit (PSDU) (the MPDU from the frame builder) to form a PHY protocol data unit (PPDU) for transmission (element 405). In some embodiments, more than one MPDU may be included in a PPDU.

The PPDU may then be transmitted to the physical layer device such as the transmitter 206 in FIG. 2 or the transceiver 1020, 1040 in FIG. 1 so the PPDU may be converted to a communication signal (element 410). The transmitter may then transmit the communication signal via the antenna (element 415).

Referring to FIG. 4B, the flowchart 450 begins with a receiver of a device in a cluster of devices such as the receiver 204 in FIG. 2 receiving a communication signal via one or more antenna(s) such as an antenna element of antenna array 218 (element 455). The receiver may convert the communication signal into an MPDU in accordance with the process described in the preamble (element 460). More specifically, the received signal is fed from the one or more antennas to a DBF such as the DBF 220. The DBF transforms the antenna signals into information signals. The output of the DBF is fed to OFDM such as the OFDM 222. The OFDM extracts signal information from the plurality of subcarriers onto which information-bearing signals are modulated. Then, the demodulator such as the demodulator 224 demodulates the signal information via, e.g., BPSK, 16-QAM, 64-QAM, 256-QAM, QPSK, or SQPSK. And the decoder such as the decoder 226 decodes the signal information from the demodulator via, e.g., BCC or LDPC, to extract the MPDU (element 460) and transmits the MPDU to MAC sublayer logic such as MAC sublayer logic 202 (element 465).

The MAC sublayer logic may determine frame field values from the MPDU (element 470) such as the management frame fields. For instance, the MAC sublayer logic may determine frame field values such as the type and subtype field values of the beacon frame. Synch logic of the MAC sublayer logic may determine that the MPDU comprises a beacon frame and may parse the frame to determine the value of the timestamp in the frame.

In some embodiments, some or all of the features described above and in the claims may be implemented in one embodiment. For instance, alternative features may be implemented as alternatives in an embodiment along with logic or selectable preference to determine which alternative to implement. Some embodiments with features that are not mutually exclusive may also include logic or a selectable preference to activate or deactivate one or more of the features. For instance, some features may be selected at the time of manufacture by including or removing a circuit pathway or transistor. Further features may be selected at the time of deployment or after deployment via logic or a selectable preference such as a dipswitch, e-fuse, or the like. Still further features may be selected by a user after via a selectable preference such as a software preference, an e-fuse, or the like.

Another embodiment is implemented as a program product for implementing systems and methods described with reference to FIGs. 1-4. Some embodiments can take the form of an entirely hardware embodiment, an entirely software embodiment, or an embodiment containing both hardware and software elements. One embodiment is implemented in software, which includes but is not limited to firmware, resident software, microcode, etc.

Furthermore, embodiments can take the form of a computer program product (or machine-accessible product) accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device). Examples of a computer-readable medium include a semiconductor or solid-state memory, magnetic tape, a removable computer diskette, a random access memory (RAM), a read-only memory (ROM), a rigid magnetic disk, and an optical disk. Current examples of optical disks include compact disk - read only memory (CD-ROM), compact disk - read/write (CD-R/W), and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

The logic as described above may be part of the design for an integrated circuit chip. The chip design is created in a graphical computer programming language, and stored in a computer storage medium (such as a disk, tape, physical hard drive, or virtual hard drive such as in a storage access network). If the designer does not fabricate chips or the photolithographic masks used to fabricate chips, the designer transmits the resulting design by physical means (e.g., by providing a copy of the storage medium storing the design) or electronically (e.g., through the Internet) to such entities, directly or indirectly. The stored design is then converted into the appropriate format (e.g., GDSII) for the fabrication.

The resulting integrated circuit chips can be distributed by the fabricator in raw wafer form (that is, as a single wafer that has multiple unpackaged chips), as a bare die, or in a packaged form. In the latter case, the chip is mounted in a single chip package (such as a plastic carrier, with leads that are affixed to a motherboard or other higher level carrier) or in a multichip package (such as a ceramic carrier that has either or both surface interconnections or buried interconnections). In any case, the chip is then integrated with other chips, discrete circuit elements, and/or other signal processing devices as part of either (a) an intermediate product, such as a motherboard, or (b) an end product.

Further embodiments may include an apparatus to determine a synchronization time and discovery period for a cluster of devices. The apparatus may comprise a memory; a medium access control logic coupled with the memory to determine a synchronization time based upon a timestamp from another station and a time synchronization bit sequence; and to determine a discovery period based upon the synchronization time and a number of bits in the time synchronization bit sequence.

In some embodiments, the apparatus may further comprise a physical layer logic to prepend the frame with a preamble and an antenna coupled with the physical layer logic to transmit the frame. In some embodiments, the medium access control logic comprises logic to select a discovery window based upon a duty cycle associated with a service and to scan for a query about the service during the discovery window. In some embodiments, the medium access control logic comprises logic to select the timestamp based upon a comparison of the timestamp with timestamps associated with other stations to determine the timestamp is associated with the fastest clock. In some embodiments, the medium access control logic comprises logic to wake for a discovery window associated with a service associated with a duty cycle. In some embodiments, the medium access control logic comprises logic to wake for a discovery window associated with a different timestamp based upon a signal power indicator associated with the timestamp and a signal power indicator associated with the different timestamp.

Further embodiments may include a program product to determine a synchronization time and discovery period for a cluster of devices. The program product may comprise a storage medium comprising instructions to be executed by a processor-based device, wherein the instructions, when executed by the processor-based device, perform operations. The operations may comprise determining a synchronization time based upon a timestamp from another station and a time synchronization bit sequence; and determining a discovery period based upon the synchronization time and a number of bits in the time synchronization bit sequence.

In some embodiments, the operations further comprise selecting a discovery window based upon a duty cycle associated with a service and scanning for a query about the service during the discovery window. In some embodiments, the operations further comprise selecting the timestamp based upon a comparison of the timestamp with timestamps associated with other stations to determine the timestamp is associated with the fastest clock. In some embodiments, the operations further comprise waking for a discovery window associated with a service associated with a duty cycle. In some embodiments, the operations further comprise waking for a discovery window associated with a different timestamp based upon a signal power indicator associated with the timestamp and a signal power indicator associated with the different timestamp.

Further embodiments may include a method may further comprise method to determine a synchronization time and discovery period for a cluster of devices. The method may comprise determining a synchronization time based upon a timestamp from another station and a time synchronization bit sequence; and determining a discovery period based upon the synchronization time and a number of bits in the time synchronization bit sequence.

In some embodiments, the method may further comprise selecting a discovery window based upon a duty cycle associated with a service and scanning for a query about the service during the discovery window. In some embodiments, the method may further comprise selecting the timestamp based upon a comparison of the timestamp with timestamps associated with other stations to determine the timestamp is associated with the fastest clock. In some embodiments, the method may further comprise waking for a discovery window associated with a service associated with a duty cycle. In some embodiments, the method may further comprise waking for a discovery window associated with a different timestamp based upon a signal power indicator associated with the timestamp and a signal power indicator associated with the different timestamp.

Further embodiments may include a system to determine a synchronization time and discovery period for a cluster of devices. The system may comprise an antenna; a medium access control logic to determine a synchronization time based upon a timestamp from another station and a time synchronization bit sequence; and to determine a discovery period based upon the synchronization time and a number of bits in the time synchronization bit sequence; and a physical layer logic to prepend the frame with a preamble and coupled with the antenna coupled with the physical layer logic to transmit the frame.

In some embodiments, the system may comprise logic to select a discovery window based upon a duty cycle associated with a service and to scan for a query about the service during the discovery window. In some embodiments, the medium access control logic comprises logic to select the timestamp based upon a comparison of the timestamp with timestamps associated with other stations to determine the timestamp is associated with the fastest clock. In some embodiments, the medium access control logic comprises logic to wake for a discovery window associated with a service associated with a duty cycle. In some embodiments, the medium access control logic comprises logic to wake for a discovery window associated with a different timestamp based upon a signal power indicator associated with the timestamp and a signal power indicator associated with the different timestamp.

Further embodiments may include an apparatus to determine a synchronization time and discovery period for a cluster of devices. The apparatus may comprise a means for determining a synchronization time based upon a timestamp from another station and a time synchronization bit sequence; and a means for determining a discovery period based upon the synchronization time and a number of bits in the time synchronization bit sequence.

In some embodiments, the apparatus may further comprise the means for selecting a discovery window based upon a duty cycle associated with a service and a means for scanning for a query about the service during the discovery window. In some embodiments, the apparatus may further comprise the means for selecting the timestamp based upon a comparison of the timestamp with timestamps associated with other stations to determine the timestamp is associated with the fastest clock. In some embodiments, the apparatus may further comprise the means for waking for a discovery window associated with a service associated with a duty cycle. In some embodiments, the apparatus may further comprise the means for waking for a discovery window associated with a different timestamp based upon a signal power indicator associated with the timestamp and a signal power indicator associated with the different timestamp.

**Claims**

1. An apparatus (1030) to determine a synchronization time and discovery period for a cluster of devices (1010, 1020, 1030, 1040) comprising:

   a means (1033) for determining a synchronization time based upon a timestamp from another station and a time synchronization bit sequence;
   a means (1034) for determining a discovery period based upon the synchronization time and a number of bits in the time synchronization bit sequence; and
   a means for waking at the synchronization time for a discovery window associated with a duty cycle of a service.

2. The apparatus of claim 1, further comprising a means for selecting a discovery window based upon a duty cycle associated with a service and a means for scanning for a query about the service during the discovery window.

3. The apparatus of claim 1, further comprising a means for selecting the timestamp based upon a comparison of the timestamp with timestamps associated with other stations to determine the timestamp is associated with the fastest clock.

4. The apparatus of claim 1, further comprising a means for waking for a discovery window associated with a different timestamp based upon a signal power indicator associated with the timestamp and a signal power indicator associated with the different timestamp.

5. A program product to determine a synchronization time and discovery period for a cluster of devices, the program product comprising:

a storage medium comprising instructions to be executed by a processor-based device, wherein the instructions, when executed by the processor-based device, perform operations, the operations comprising:

determining a synchronization time based upon a timestamp from another station and a time synchronization bit sequence;

determining a discovery period based upon the synchronization time and a number of bits in the time synchronization bit sequence; and

waking at the synchronization time for a discovery window associated with a duty cycle of a service.

6. The program product of claim 5, wherein the operations further comprise selecting a discovery window based upon a duty cycle associated with a service and scanning for a query about the service during the discovery window.

7. The program product of claim 5, wherein the operations further comprise selecting the timestamp based upon a comparison of the timestamp with timestamps associated with other stations to determine the timestamp is associated with the fastest clock.

8. The program product of claim 5, wherein the operations further comprise waking for a discovery window associated with a different timestamp based upon a signal power indicator associated with the timestamp and a signal power indicator associated with the different timestamp.

9. A method to determine a synchronization time and discovery period for a cluster of devices, the method comprising:

determining a synchronization time based upon a timestamp from another station and a time synchronization bit sequence;

determining a discovery period based upon the synchronization time and a number of bits in the time synchronization bit sequence; and

waking at the synchronization time for a discovery window associated with a duty cycle of a service.

10. The method of claim 9, further comprising selecting a discovery window based upon a duty cycle associated with a service and scanning for a query about the service during the discovery window.

11. The method of claim 9, further comprising selecting the timestamp based upon a comparison of the timestamp with timestamps associated with other stations to determine the timestamp is associated with the fastest clock.

12. The method of claim 9, further comprising waking for a discovery window associated with a different timestamp based upon a signal power indicator associated with the timestamp and a signal power indicator associated with the different timestamp.

**Patentansprüche**

1. Gerät (1030) zum Bestimmen einer Synchronisationszeit und einer Entdeckungsperiode für eine Gruppe von Vorrichtungen (1010, 1020, 1030, 1040), umfassend:

ein Mittel (1033) zum Bestimmen einer Synchronisationszeit basierend auf einem Zeitstempel von einer anderen Station und einer Zeitsynchronisation-Bitabfolge;

ein Mittel (1034) zum Bestimmen einer Entdeckungsperiode basierend auf der Synchronisationszeit und einer Anzahl von Bits in der Zeitsynchronisation-Bitabfolge; und

ein Mittel zum Wecken zu der Synchronisationszeit für ein mit einem Arbeitszyklus eines Dienstes assoziiertes Entdeckungsfenster.

2. Gerät nach Anspruch 1, ferner umfassend ein Mittel zum Auswählen eines Entdeckungsfensters basierend auf einem mit einem Dienst assoziierten Arbeitszyklus und ein Mittel zum Abtasten auf eine Abfrage über den Dienst während des Entdeckungsfensters.

3. Gerät nach Anspruch 1, ferner umfassend ein Mittel zum Auswählen des Zeitstempels basierend auf einem Vergleich des Zeitstempels mit Zeitstempeln, die mit anderen Stationen assoziiert sind, um zu bestimmen, dass der Zeitstempel mit dem schnellsten Takt assoziiert ist.

**4.** Gerät nach Anspruch 1, ferner umfassend ein Mittel zum Wecken für ein mit einem verschiedenen Zeitstempel assoziiertes Entdeckungsfester basierend auf einem mit dem Zeitstempel assoziierten Signalleistungsindikator und einem mit dem verschiedenen Zeitstempel assoziierten Signalleistungsindikator.

**5.** Programmprodukt zum Bestimmen einer Synchronisationszeit und einer Entdeckungsperiode für eine Gruppe von Vorrichtungen, das Programmprodukt umfassend:
ein Speichermedium, umfassend Anweisungen, die durch eine prozessorbasierte Vorrichtung auszuführen sind, wobei die Anweisungen, wenn sie durch die prozessorbasierte Vorrichtung ausgeführt werden, Operationen durchführen, die Operationen umfassend:

Bestimmen einer Synchronisationszeit basierend auf einem Zeitstempel von einer anderen Station und einer Zeitsynchronisation-Bitabfolge;
Bestimmen einer Entdeckungsperiode basierend auf der Synchronisationszeit und einer Anzahl von Bits in der Zeitsynchronisation-Bitabfolge; und
Wecken zu der Synchronisationszeit für ein mit einem Arbeitszyklus eines Dienstes assoziiertes Entdeckungsfenster.

**6.** Programmprodukt nach Anspruch 5, wobei die Operationen ferner Auswählen eines Entdeckungsfensters basierend auf einem mit einem Dienst assoziierten Arbeitszyklus und Abtasten auf eine Abfrage über den Dienst während des Entdeckungsfensters umfassen.

**7.** Programmprodukt nach Anspruch 5, wobei die Operationen ferner Auswählen des Zeitstempels basierend auf einem Vergleich des Zeitstempels mit Zeitstempeln, die mit anderen Stationen assoziiert sind, umfassen, um zu bestimmen, dass der Zeitstempel mit dem schnellsten Takt assoziiert ist.

**8.** Programmprodukt nach Anspruch 5, wobei die Operationen ferner Wecken für ein mit einem verschiedenen Zeitstempel assoziiertes Entdeckungsfester basierend auf einem mit dem Zeitstempel assoziierten Signalleistungsindikator und einem mit dem verschiedenen Zeitstempel assoziierten Signalleistungsindikator umfassen.

**9.** Verfahren zum Bestimmen einer Synchronisationszeit und einer Entdeckungsperiode für eine Gruppe von Vorrichtungen, das Verfahren umfassend:

Bestimmen einer Synchronisationszeit basierend auf einem Zeitstempel von einer anderen Station und einer Zeitsynchronisation-Bitabfolge;
Bestimmen einer Entdeckungsperiode basierend auf der Synchronisationszeit und einer Anzahl von Bits in der Zeitsynchronisation-Bitabfolge; und
Wecken zu der Synchronisationszeit für ein mit einem Arbeitszyklus eines Dienstes assoziiertes Entdeckungsfenster.

**10.** Verfahren nach Anspruch 9, ferner umfassend Auswählen eines Entdeckungsfensters basierend auf einem mit einem Dienst assoziierten Arbeitszyklus und Abtasten auf eine Abfrage über den Dienst während des Entdeckungsfensters.

**11.** Verfahren nach Anspruch 9, ferner umfassend Auswählen des Zeitstempels basierend auf einem Vergleich des Zeitstempels mit Zeitstempeln, die mit anderen Stationen assoziiert sind, um zu bestimmen, dass der Zeitstempel mit dem schnellsten Takt assoziiert ist.

**12.** Verfahren nach Anspruch 9, ferner umfassend Wecken für ein mit einem verschiedenen Zeitstempel assoziiertes Entdeckungsfester basierend auf einem mit dem Zeitstempel assoziierten Signalleistungsindikator und einem mit dem verschiedenen Zeitstempel assoziierten Signalleistungsindikator.

**Revendications**

**1.** Appareil (1030) pour déterminer un temps de synchronisation et une période de découverte pour une grappe de dispositifs (1010, 1020, 1030, 1040), comprenant :

un moyen (1033) de détermination d'un temps de synchronisation sur la base d'une estampille temporelle en provenance d'une autre station et d'une séquence de bits de synchronisation temporelle ;
un moyen (1034) de détermination d'une période de découverte sur la base du temps de synchronisation et d'un nombre de bits dans la séquence de bits de synchronisation temporelle ; et
un moyen de réveil au temps de synchronisation pendant une fenêtre de découverte associée à un cycle de travail d'un service.

2. Appareil selon la revendication 1, comprenant en outre un moyen de sélection d'une fenêtre de découverte sur la base d'un cycle de travail associé à un service et un moyen de scrutation d'une requête portant sur le service au cours de la fenêtre de découverte.

3. Appareil selon la revendication 1, comprenant en outre un moyen de sélection de l'estampille temporelle sur la base d'une comparaison de l'estampille temporelle à des estampilles temporelles associées à d'autres stations dans le but de déterminer que l'estampille temporelle est associée à l'horloge la plus rapide.

4. Appareil selon la revendication 1, comprenant en outre un moyen de réveil pendant une fenêtre de découverte associée à une estampille temporelle différente sur la base d'un indicateur de puissance de signal associé à l'estampille temporelle et d'un indicateur de puissance de signal associé à l'estampille temporelle différente.

5. Produit-programme destiné à déterminer un temps de synchronisation et une période de découverte pour une grappe de dispositifs, le produit-programme comprenant :
un support d'enregistrement comprenant des instructions destinées à être exécutées par un dispositif à base de processeur(s), les instructions, une fois exécutées par le dispositif à base de processeur(s), accomplissant des opérations, les opérations comprenant :

la détermination d'un temps de synchronisation sur la base d'une estampille temporelle en provenance d'une autre station et d'une séquence de bits de synchronisation temporelle ;
la détermination d'une période de découverte sur la base du temps de synchronisation et d'un nombre de bits dans la séquence de bits de synchronisation temporelle ; et
le réveil au temps de synchronisation pendant une fenêtre de découverte associée à un cycle de travail d'un service.

6. Produit-programme selon la revendication 5, dans lequel les opérations comprennent en outre la sélection d'une fenêtre de découverte sur la base d'un cycle de travail associé à un service et la scrutation d'une requête portant sur le service au cours de la fenêtre de découverte.

7. Produit-programme selon la revendication 5, dans lequel les opérations comprennent en outre la sélection de l'estampille temporelle sur la base d'une comparaison de l'estampille temporelle à des estampilles temporelles associées à d'autres stations dans le but de déterminer que l'estampille temporelle est associée à l'horloge la plus rapide.

8. Produit-programme selon la revendication 5, dans lequel les opérations comprennent en outre le réveil pendant une fenêtre de découverte associé à une estampille temporelle différente sur la base d'un indicateur de puissance de signal associé à l'estampille temporelle et d'un indicateur de puissance de signal associé à l'estampille temporelle différente.

9. Procédé de détermination d'un temps de synchronisation et d'une période de découverte pour une grappe de dispositifs, le procédé comprenant :

la détermination d'un temps de synchronisation sur la base d'une estampille temporelle en provenance d'une autre station et d'une séquence de bits de synchronisation temporelle ;
la détermination d'une période de découverte sur la base du temps de synchronisation et d'un nombre de bits dans la séquence de bits de synchronisation temporelle ; et
le réveil au temps de synchronisation pendant une fenêtre de découverte associée à un cycle de travail d'un service.

10. Procédé selon la revendication 9, comprenant en outre la sélection d'une fenêtre de découverte sur la base d'un cycle de travail associé à un service et la scrutation d'une requête portant sur le service au cours de la fenêtre de découverte.

**11.** Procédé selon la revendication 9, comprenant en outre la sélection de l'estampille temporelle sur la base d'une comparaison de l'estampille temporelle à des estampilles temporelles associées à d'autres stations dans le but de déterminer que l'estampille temporelle est associée à l'horloge la plus rapide.

**12.** Procédé selon la revendication 9, comprenant en outre le réveil pendant une fenêtre de découverte associée à une estampille temporelle différente sur la base d'un indicateur de puissance de signal associé à l'estampille temporelle et d'un indicateur de puissance de signal associé à l'estampille temporelle différente.

**FIG. 1**

EP 2 929 738 B1

FIG. 1A

FIG. 1B

FIG. 1C

FIG. 2

FIG. 3A

300

START

302
SCANNING FOR AN AP BEACON (ACTIVELY OR PASSIVELY)

305
SELECTING AN AP FOR TIME SYNCHRONIZATION

310
DETERMINING A SYNCHRONIZATION TIME BASED A TIMESTAMP

315
DETERMINING A DISCOVERY PERIOD

320
DETERMINING A DISCOVERY WINDOW

325
DETERMINING A DUTY CYCLE

330
SCAN OTHER DW?

NO

YES

335
WAKING AT OTHER DISCOVERY WINDOW

END

FIG. 3B

350

START

355
JOINING A CLUSTER OF DEVICES

360
SCANNING FOR QUERY DURING DISCOVERY WINDOWS ACCORDING TO DUTY CYCLE

365
RESPONDING TO SERVICE QUERY DURING DW

END

START

PREPEND A FRAME WITH A PREAMBLE IN A PPDU — 405

CONVERT THE PPDU TO A COMMUNICATION SIGNAL — 410

TRANSMIT THE COMMUNICATION SIGNAL — 415

END

FIG. 4A

400

START

RECEIVING A COMMUNICATION SIGNAL FROM A COMMUNICATION DEVICE — 455

CONVERTING THE COMMUNICATION SIGNAL TO AN MPDU — 460

TRANSMITTING THE MPDU TO THE MAC SUBLAYER LOGIC — 465

DETERMINING A FRAME FROM THE MPDU — 470

END

FIG. 4B

450

**EP 2 929 738 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008123558 A1